# EUROPEAN PATENT SPECIFICATION

(11) **EP 2 327 049 B1**
(45) Date of publication and mention of the grant of the patent: **28.02.2018**
(21) Application number: 09803231.1
(22) Date of filing: 20.07.2009
(51) Int. Cl.: H04W 12/06, G06Q 40/02, G06Q 20/32, G06Q 20/10, H04W 4/14, H04L 29/08

(54) **MOBILE BANKING WITH SHORT MESSAGE SERVICE**
MOBILES BANKING MIT KURZNACHRICHTENDIENST
OPÉRATIONS BANCAIRES MOBILES AVEC SERVICE DE MESSAGES COURTS

(30) Priority: 31.07.2008 US 183390
(43) Date of publication of application: 01.06.2011
(73) Proprietor: Sybase, Inc., Dublin, CA 94568 (US)
(72) Inventor: SARMAH, Dilip, Fremont CA 94536 (US); LEBEGUE, Hugues, A., Livermore CA 94551 (US); HERMENS, Paul, J., Livermore CA 94551 (US); MURONG, Lin, Waterloo ON N2T 2J4 (CA)
(74) Representative: Mathys & Squire LLP
(86) International application number: PCT/US2009/004180
(87) International publication number: WO 2010/014144

(56) References cited:
- KR-A- 20030 090 435
- US-A1- 2004 267 665
- US-A1- 2005 246 253
- US-A1- 2007 022 019
- US-A1- 2007 174 455
- US-A1- 2007 203 836
- US-A1- 2008 027 844
- POUSTTCHI K ET AL: "Assessment of today's mobile banking applications from the view of customer requirements", SYSTEM SCIENCES, 2004. PROCEEDINGS OF THE 37TH ANNUAL HAWAII INTERNATI ONAL CONFERENCE ON 5-8 JAN. 2004, PISCATAWAY, NJ, USA,IEEE, 5 January 2004 (2004-01-05), pages 184-193, XP010683245, DOI: 10.1109/HICSS.2004.1265440 ISBN: 978-0-7695-2056-8
- KOUSARIDAS A ET AL: "An open financial services architecture based on the use of intelligent mobile devices", ELECTRONIC COMMERCE RESEARCH AND APPLICATIONS, ELSEVIER, vol. 7, no. 2, 1 July 2008 (2008-07-01), pages 232-246, XP022688891, ISSN: 1567-4223, DOI: 10.1016/J.ELERAP.2007.04.003

## Description

### RELATED APPLICATIONS

The present application is related to commonly-owned U.S. Patent Application No. 12/183,377, Atty. Dkt. No. 1933.0600000, filed July 31, 2008, entitled MOBILE BANKING ARCHITECTURE.

### BACKGROUND OF INVENTION

### FIELD OF THE INVENTION

The present invention relates generally to an interface for a transaction system and, more specifically, to mobile banking over short message service.

### DESCRIPTION OF THE BACKGROUND ART

With the prevalence of wireless data service over cellular phones, many business operations have facilitated access to their online services by providing their own services specifically tailored to these phones. For example, merchants may operate a mobile webpage separate from their primary webpage which is specially formatted to ease navigation by a cell phone user. Since cell phones suffer from a number of accessibility issues, often due to the limited input and output options, providing means for interacting with the business that are specially designed for cell phone users may be the only way of ensuring a quality experience.

Financial institutions are among the business operations that attempt to cater to cell phone users. As previously discussed, often this includes designing a special web page for cell phone users to access their account information, taking into account display constraints on a cell phone screen and the input capabilities of a cell phone. Other financial institutions may instead rely on an automated service which a telephone user may call, allowing the user to navigate a series of prompts in order to perform a financial transaction.

Although the efforts of these financial institutions, as well as other business operations, has increased the efficiency of interacting with the business using either data or voice communications on cellular phones, implementing such facilities often involves tremendous expenditure by the business. Not only must the business run a service for accepting the communications from its customers, but must also design, implement, and maintain the infrastructure which allows the communications received from its customers to manipulate their records on the business' existing systems.

Short Message Service ("SMS") is a communications protocol available to many cell phone users, allowing for the transmission of brief text messages to other cell phone users. Due to the limitations of SMS, it has been difficult to employ in commercial settings, and very limited uses exist for SMS which allow users to perform transactions with a business, such as a financial institution.

Accordingly, what is desired is an interface for enabling business operations, such as financial institutions, to integrate SMS communications into their business systems.

US 2007/0203836 discloses an electronic on-line payment method in which a text message is received from a payor containing a payment request, a payment amount associated with the text message is determined, and a payor and payee account are debited/credited accordingly. US 2007/0022019 discloses a text message order processing system in which text messages are received from consumers and parsed to extract order information, and an order is then generated and submitted to a merchant order management system. US 2007/0174455 discloses a printing system in which an execution feasibility table defines whether given control commands are executable by different system users.

### SUMMARY OF INVENTION

Aspects of the invention are set out in the independent claims. Certain preferred features are set out in the dependent claims.

Embodiments of the invention include a method for interfacing a user device to a transaction system. The method includes receiving an instruction from an SMS gateway in an SMS message, the SMS message originating from the user device, parsing the instruction to obtain a corresponding transaction, calling a function on the transaction system for performing the transaction, receiving a response from the transaction system, and transmitting the response to the user device in a response SMS message.

Embodiments of the invention additionally include an interface between a user device and a transaction system. The interface includes a first receiving module to receive an instruction from an SMS gateway in an SMS message, the SMS message originating from the user device, a parsing module to parse the instruction to obtain a corresponding transaction, a service manager module to call a function on the transaction system for performing the transaction, a second receiving module to receive a response from the transaction system, and a transmitting module to transmit the response to the user device in a response SMS message.

Embodiments of the invention further include a computer program product comprising a computer-usable medium having computer program logic recorded thereon for enabling a processor to provide an interface between a user device and a transaction system. The computer program logic includes first receiving means for enabling a processor to receive an instruction from an SMS gateway in an SMS message, the SMS message originating from the user device, parsing means for enabling a processor to parse the instruction to obtain a corresponding transaction, calling means for enabling a processor to call a function on the transaction system for performing the transaction, second receiving means for enabling a processor to receive a response from the transaction system, and transmitting means for enabling a processor to transmit the response to the user device in a response SMS message.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form a part of the specification, illustrate embodiments of the present invention and, together with the description, further serve to explain the principles of the invention and to enable a person skilled in the relevant art to make and use the invention.
FIG. 1 illustrates a mobile banking network, in accordance with an embodiment of the present invention.
FIG. 2 illustrates communication channels in a mobile banking network, in accordance with an embodiment of the present invention.
FIG. 3 illustrates a mobile banking interface, in accordance with an embodiment of the present invention.
FIG. 4 illustrates additional modules of a mobile banking interface, in accordance with an embodiment of the present invention.
FIG. 5 is a flowchart depicting steps by which a mobile banking interface can interface with a user device and a banking system, in accordance with an embodiment of the present invention.
FIG. 6 is a flowchart depicting steps for providing user authentication to a mobile banking interface, in accordance with an embodiment of the present invention.
FIG. 7 illustrates an SMS service for a mobile banking interface, in accordance with an embodiment of the present invention.
FIG. 8 illustrates a smart client service for a mobile banking interface, in accordance with an embodiment of the present invention.
FIG. 9 illustrates a WAP service for a mobile banking interface, in accordance with an embodiment of the present invention.
FIG. 10 illustrates command security levels, in accordance with an embodiment of the present invention.
FIG. 11 illustrates a user authentication and transaction interface on a user device, in accordance with an embodiment of the present invention.
FIG. 12 illustrates a command grammar module, in accordance with an embodiment of the present invention.
FIG. 13 is a flowchart depicting steps by which a user locale is determined, in accordance with an embodiment of the present invention.
FIG. 14 depicts an example computer system in which embodiments of the present invention may be implemented.

The present invention will now be described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

### I. INTRODUCTION

The following detailed description of the present invention refers to the accompanying drawings that illustrate exemplary embodiments consistent with this invention. Other embodiments are possible, and modifications can be made to the embodiments within the spirit and scope of the invention. Therefore, the detailed description is not meant to limit the invention. Rather, the scope of the invention is defined by the appended claims.

It would be apparent to one of skill in the art that the present invention, as described below, can be implemented in many different embodiments of software, hardware, firmware, and/or the entities illustrated in the figures. Any actual software code with the specialized control of hardware to implement the present invention is not limiting of the present invention. Thus, the operational behavior of the present invention will be described with the understanding that modifications and variations of the embodiments are possible, given the level of detail presented herein.

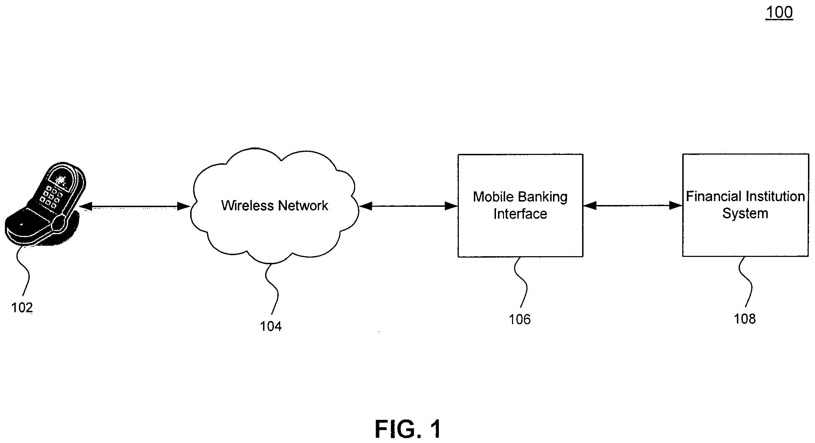

FIG. 1 is a network 100 depicting a mobile banking network, in accordance with an embodiment of the present invention. The network 100 includes a user device 102, a wireless network 104, a mobile banking interface 106, and a financial institution system 108. As used in this specification, user device 102 will commonly be a cellular telephone having data communication capabilities, although one skilled in the relevant arts will readily appreciate that any communication device, or device having communication capabilities, can be substituted. Similarly, network 104 will commonly be a wireless network throughout this specification, although one skilled in the relevant arts will likewise appreciate that, depending on the capabilities of user device 102, other network types, to include wired networks of any type, or wireless technology of any type (e.g., Bluetooth, cellular, wi-fi, ad hoc, etc.), can be substituted for wireless network 104.

Financial system 108 will commonly be a banking system throughout this specification, the system for enabling a user to access his or her financial records and perform financial transactions such as balance inquiries or transfers of funds from one of the user's accounts to another, in accordance with an embodiment of the present invention. However, one skilled in the relevant arts will appreciate that system 108 need not be limited to the banking or financial context, and may include other systems which a user device 102 operates with. By way of example, and not limitation, mobile banking interface 106 will be discussed throughout this specification as providing an interface for banking functions available to a user through financial institution system 108, but one skilled in the relevant arts will appreciate that interface 106 and system 108 could instead allow a user to access, through user device 102, other systems. By way of example, and not limitation, interface 106 and system 108 could allow a user of user device 102 to access a merchant system (substituted for financial system 108) in order to initiate a purchase accessed through a merchant system interface (substituted for mobile banking interface 106).

Financial system 108 is, in accordance with an embodiment of the present invention, a webpage front-end to a banking database (not shown). Normally, a user would access such a system by opening a web browser on a personal computer an accessing the webpage directly, utilizing functions embedded within the webpage to interact with their account information stored at the financial institution. In accordance with an additional embodiment of the present invention, financial system 108 is a network-accessible entry point for users, such as customers, of the financial institution to access their account information. In accordance with a further embodiment of the present invention, financial system 108 is a core banking system manually operated by a bank employee. One skilled in the relevant arts will appreciate that additional configurations for financial system 108 are within the scope of the present invention, and the aforementioned configurations are presented by way of example, not limitation.

Mobile banking interface 106 eases the communications between user device 102 and financial system 108 by receiving instructions from user device 102 and translating the instructions into operations understandable by financial system 108, as further disclosed below, in accordance with an embodiment of the present invention. Furthermore, mobile banking interface 106 includes logic for establishing communications with user device 102 over wireless network 104, in accordance with an embodiment of the present invention. Wireless network 104 is, in accordance with an additional embodiment of the present invention, a cellular communications network.

### II. NETWORK COMMUNICATIONS

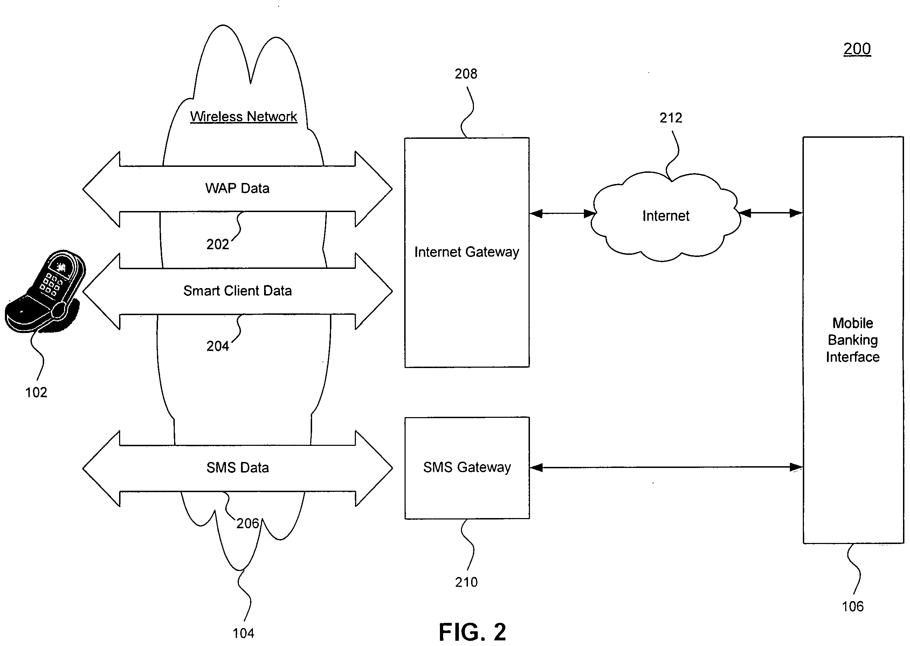

FIG. 2 is a network 200 illustrating communication channels in a mobile banking network, in accordance with an embodiment of the present invention. As previously disclosed, a user device 102 is operable to connect to a mobile banking interface 106 over wireless network 104 in order to access a financial system (not shown). One skilled in the relevant arts will recognize that a user device 102, such as a cellular phone, can communicate using a number of different protocols over a wireless network 104, such as a cellular communications network.

In accordance with an embodiment of the present invention, user device 102 is configured to transmit data conforming to the Short Message Service ("SMS") protocol 206 over wireless network 104. An SMS gateway 210 is used to receive the SMS data 206 communications from wireless network 104 and forward the communications to mobile banking interface 106, in accordance with an embodiment of the present invention. In accordance with an additional embodiment of the present invention, SMS gateway 210 is the Sybase 365™ system provided by Sybase, Inc. of Dublin, CA. One skilled in the relevant arts will recognize that the precise configuration of the SMS gateway 210 as shown in FIG. 2 need not exist in every system, where instead other means for forwarding the SMS data 206 communications to mobile banking interface 106 are implemented.

In accordance with an embodiment of the present invention, user device 102 transmits SMS data 206 to SMS gateway 210 through the use of a special "short code" assigned to the mobile banking interface 106, in order to allow SMS gateway 210 to properly route the SMS data 206 to the mobile banking interface 106. In accordance with an additional embodiment of the present invention, the short code is instead assigned to the financial institution which is fronted by mobile banking interface 106.

Further details regarding the mobile banking network are disclosed in commonly-owned U.S. Patent Application No. 12/183,377, Atty. Dkt. No. 1933.0600000, filed July 31, 2008, entitled MOBILE BANKING ARCHITECTURE, which is hereby incorporated by reference in its entirety.

### III. MOBILE BANKING INTERFACE

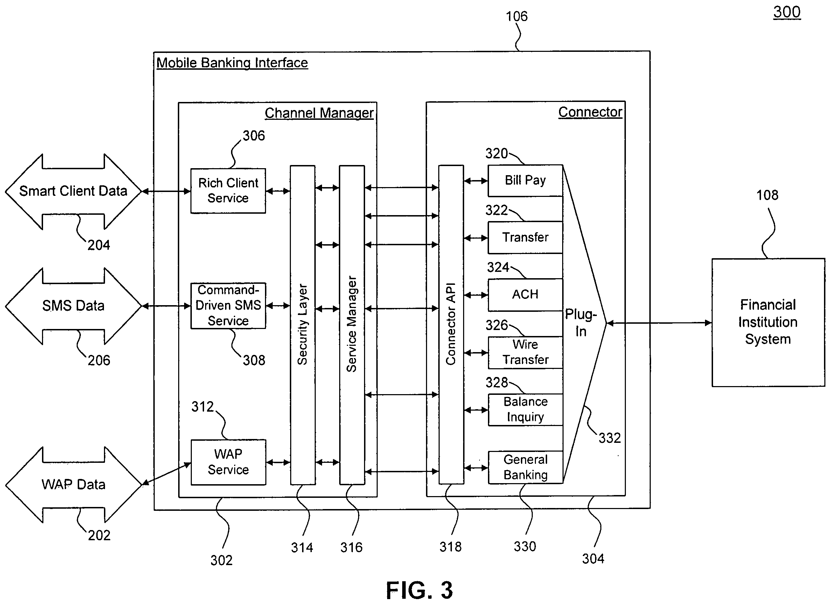

FIG. 3 is a network 300 illustrating additional features of mobile banking interface 106, in accordance with an embodiment of the present invention. As previously illustrated in FIG. 2, mobile banking interface 106 is capable of receiving SMS data 206. Mobile banking interface comprises a channel manager module 302 for managing communications over one or more data channels, such as the channel associated with SMS data 206, in accordance with an embodiment of the present invention. The SMS channel is handled by command-driven SMS service module 308 for interfacing with SMS data 206, in accordance with an embodiment of the present invention.

Further details regarding the channel manager 302 are disclosed in commonly-owned U.S. Patent Application No. 12/183,377, Atty. Dkt. No. 1933.0600000, filed July 31, 2008, entitled MOBILE BANKING ARCHITECTURE, which is hereby incorporated by reference in its entirety.

Channel manager 302 further comprises a security layer for authenticating a user or a user device, in accordance with an embodiment of the present invention. The security layer is configured to determine a level of authentication required for performing an instruction from a user received through a service module, such as service modules 306, 308, and 312, authenticating the user or user device, and enabling the processing of the instruction if authentication is achieved, in accordance with an embodiment of the present invention.

Channel manager 302 further comprises service manager 316, in accordance with an embodiment of the present invention. Channel manager 302 facilitates the communication of instructions received from a user device through command-driven service module 308 to the financial system 108 through a connector module 304, which is fully discussed below, in accordance with an embodiment of the present invention. One skilled in the relevant arts will appreciate that the capabilities of service manager 316 need not be centralized in a single module, and can instead be optionally distributed throughout channel manager 302. In accordance with an embodiment of the present invention, the capabilities of service manager 316 are localized within command-driven service module 308. In accordance with a further embodiment of the present invention, the channel manager 302 is part of the service manager 316.

Connector module 304 enables channel manager 302 to call functions in financial system 108 through, for example, service manager 316, for performing the instructions received from a user device through command-driven SMS service module 308 in accordance with an embodiment of the present invention. The functionality of connector module 304 is achieved by providing connector application programming interface ("API") 318 within connector module 304, in accordance with an embodiment of the present invention.

Connector API 318 provides an interface to functions provided by financial system 108, which can be called by service manager 316 to carry out instructions received from a user device over command-driven service module 308. Examples of functions provided by financial system 108 include bill pay 320 functionality, transfer 322 functionality, automated clearing house ("ACH") 324 functionality, wire transfer 326 functionality, balance inquiry 328 functionality, and general banking 330 functionality. One skilled in the relevant arts will recognize that financial system 108 can provide additional functionality in order to enable a user to interact with the financial institution, and the aforementioned functions provided by financial system 108 are described by way of example, and not limitation. Furthermore, as previously disclosed, such functionality is not limited to financial services, and can be extended to other applications, including any application involving user interaction.

In order to implement the functions described in connector API 318, a connector plug-in 332 is provided in connector 304, in accordance with an embodiment of the present invention. Plug-in 332 implements one or more of the functions described by connector API 318, such as, for example, transfer 322 functionality, or balance inquiry 328 functionality. In accordance with an embodiment of the present invention, a developer creates an implementation of a plug-in 332 for use with connector 304. In accordance with a further embodiment of the present invention, multiple plug-ins 332 are provided concurrently for connecting to multiple financial institution system 108 back-ends. One skilled in the relevant arts will appreciate that a number of configurations exist for plug-in 332, and the aforementioned configurations are provided by way of example, and not limitation.

In accordance with an embodiment of the present invention, connector API 318 provides a function specification for defining the input and output parameters used by the function. Service manager 316 is configured to call the function if it has been implemented in plug-in 332. The function is implemented in plug-in 332 by defining a function for each of the one or more functions described by connector API 318, the implemented function having the input and output parameters defined by the corresponding function specification, in accordance with an embodiment of the present invention. For example, the specification for the transfer 322 function can take a source account, a destination account, and a dollar value as inputs, and provide a confirmation of success or failure as the output. An actual implementation of the transfer 322 function within plug-in 322 would use the aforementioned inputs to perform the transfer transaction and would return a success or failure message, in accordance with the function specification of connector API 318. In accordance with an embodiment of the present invention, this implementation is accomplished through the use of virtual functions.

Plug-in 332 implements the functions by calling one or more remote functions of financial system 108, in accordance with an embodiment of the present invention. For example, if financial system 108 does not have a dedicated communications service for interfacing with plug-in 332, but has an online banking service, plug-in 332 can be implemented to access the financial system 108's online banking service over the Internet to ultimately perform the implemented function, in accordance with an embodiment of the present invention.

### IV. ADDITIONAL FUNCTIONALITY OF THE MOBILE BANKING INTERFACE

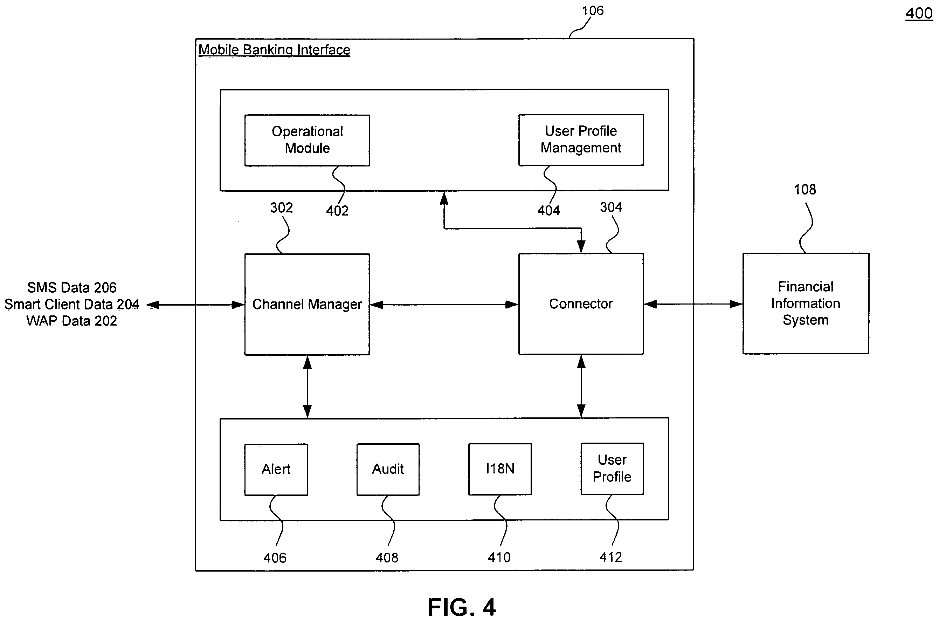

FIG. 4 illustrates a network 400 including mobile banking interface 106, in accordance with an embodiment of the present invention. As before, mobile banking interface 106 includes channel manager 302 and connector 304, but also includes additional modules for enhancing the functionality of mobile banking interface 106. These additional modules are described in more detail below.

Operational module 402 is a web application that allows employees of the financial institution to perform employee-oriented banking tasks, such as reporting, case management, or entitlement management, in accordance with an embodiment of the present invention. User profile management module 404 is a web application that allows a customer of the financial institution, as well as employees of the financial institution, to manage the customer's profile, such as user profile 412, as it relates to the mobile banking interface 106, in accordance with an embodiment of the present invention.

Alert module 406 is configured to send messages to the user device related to an alert condition, in accordance with an embodiment of the present invention. For example, mobile banking interface 106 can provide an alert to the user device through alert module 406 if a user's account balance drops below a certain amount.

Audit module 408 provides a mechanism for storing events and messages that pass through mobile banking interface 106, in accordance with an embodiment of the present invention. In accordance with an embodiment of the present invention, audit module 408 is configured to store all instructions received from a user device in channel manager 302. One skilled in the relevant arts will recognize that audit module 408 can be configured to log any communications occurring within mobile banking interface 106, either internal to mobile banking interface 106, or in communications with systems outside of mobile banking interface 106, such as financial system 108. Audit module 408 is further operable to provide audit log reports to employees of the financial institution through operational module 402, in accordance with an embodiment of the present invention.

I18N module 410 enables the internationalization of mobile banking interface 106, in accordance with an embodiment of the present invention. In accordance with a further embodiment of the present invention, all messages sent to a user device are defined in resource files, and thus can be localized. Similarly, formats for dates, numbers, and currencies can be customized for each locale, in accordance with an embodiment of the present invention. In accordance with an additional embodiment of the present invention, instructions received from a user device at channel manager 302 are interpreted in accordance with a customizable instruction language corresponding to a user locale.

### V. OPERATION OF THE MOBILE BANKING INTERFACE

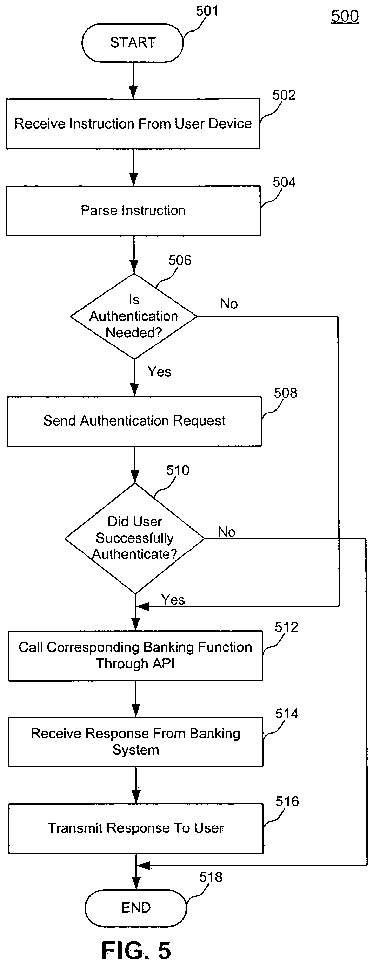

FIG. 5 is a flowchart 500 depicting an operational flow of mobile banking interface 106, in accordance with an embodiment of the present invention. Flowchart 500 is described with continued reference to network 300 of FIG. 3. The method begins at step 501 and proceeds to step 502, where the mobile banking interface 106 receives an instruction from the user device in an SMS message. At step 504, the mobile banking interface 106 parses the instruction. The instruction is parsed, in accordance with an embodiment of the present invention, at command-driven SMS service module 308 in mobile banking interface 106.

At step 506, the mobile banking interface 106 determines whether authentication is needed in order to process the parsed instruction. If no authentication is needed, the method continues to step 512; otherwise, if authentication is needed, the method then proceeds to step 508 where an authentication request is sent to the user device. In accordance with an embodiment of the present invention, authentication is performed by the security layer 314 of mobile banking interface 106. At step 510, the mobile banking interface 106 determines whether authentication was successful. If authentication was unsuccessful, the method proceeds to step 518 where processing ends. If authentication was successful, the method continues to step 512.

At step 512, the mobile banking interface 106 calls a function corresponding to the parsed instruction from step 504. In accordance with an embodiment of the present invention, the function is called through connector API 318, with the function implementation provided by plug-in 332. As previously disclosed, the function communicates with financial system 108 to perform the requested instruction, and at step 514 the mobile banking interface 106 receives a response from the financial system 108 as a result of processing the function. At step 516, the response is provided to the user device, and the method ends at step 518.

Further details regarding the mobile banking interface 106 are disclosed in commonly-owned U.S. Patent Application No. 12/183,377, Atty. Dkt. No. 1933.0600000, filed July 31, 2008, entitled MOBILE BANKING ARCHITECTURE, which is hereby incorporated by reference in its entirety.

With continued reference to flowchart 500 of FIG. 5, network 300 of FIG. 3, and network 200 of FIG. 2, an example user interaction with mobile banking interface 106 is disclosed, in accordance with an embodiment of the present invention. A user enters an SMS message (or "text message") at user device 102 with an instruction to perform some transaction at financial system 108. In this example, the user enters the message "BAL 34789" in order to instruct mobile banking interface 106 to retrieve the balance for her account number 34789. The user then sends this SMS message to mobile banking interface 106 by entering a number associated with the mobile banking interface 106. In accordance with an embodiment of the present invention, the number entered is a short code, such as 10936, that uniquely identifies mobile banking interface 106 and the financial system 108 it fronts.

At step 502 of flowchart 500, the mobile banking interface 106 receives the SMS message, which is an instruction from the user, and at step 504 the mobile banking interface 106 parses the message in order to determine a command. At step 504, then, mobile banking interface 106 would identify two tokens in the aforementioned message, the tokens being "BAL" and "34789", in accordance with an embodiment of the present invention. In accordance with an additional embodiment of the present invention, mobile banking interface 106 expects the command to be provided by the first token in the SMS message, although one skilled in the relevant arts will appreciate that other means for parsing the instruction can be used. In this case, mobile banking interface 106 would interpret the first token, "BAL", as a command and would associate the token with the command to request the user's account balance. Subsequent tokens, in accordance with an embodiment of the present invention, are interpreted as parameters subject to the command grammar, as will be fully disclosed herein. In accordance with a further embodiment of the present invention, the parser of mobile banking interface 106 is configurable to define, or redefine, the syntax and/or semantics expected from an instruction in an SMS message.

At steps 506, 508, and 510, the mobile banking interface 106 performs any necessary authentication, as will be fully disclosed herein. At step 512, the banking function corresponding to the "BAL" command is called by service manager 316 using connector API 318, in accordance with an embodiment of the present invention. The associated function is, in accordance with an embodiment of the present invention, balance inquiry function 328, as implemented by plug-in 332. The corresponding function implementation of plug-in 332 interacts with financial system 108 in order to perform the transactions associated with the function, and then at step 514 the mobile banking interface 106 receives a response to the transactions from financial system 108.

At step 516, mobile banking interface 106 transmits the response to the user. In accordance with an embodiment of the present invention, the response is formatted to fit within the limitations of an SMS message. For the aforementioned example, the response SMS message would be, in accordance with an embodiment of the present invention:
Bal Inq for Acc 34789:
   $14,897.44

In accordance with an additional embodiment of the present invention, if the authentication of steps 506, 508, and 510 fails, an SMS message to this effect is transmitted to the user instead of the information requested by the user. In accordance with a further embodiment of the present invention, the response SMS message sent by mobile banking interface 106 is configurable.

### VI. OPERATION OF THE SECURITY LAYER

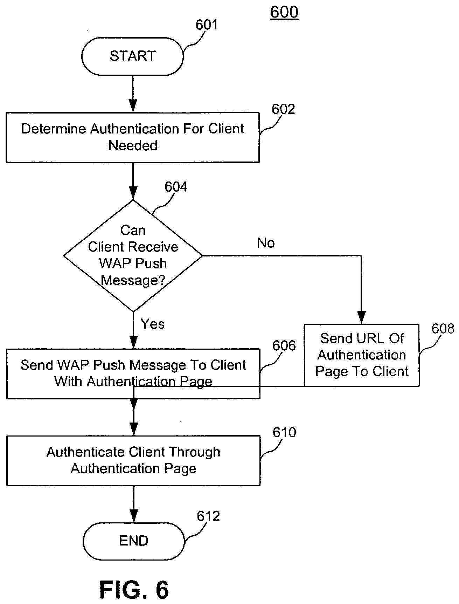

FIG. 6 is a flowchart 600 depicting an operational flow of security layer 314, in accordance with an embodiment of the present invention. The method begins at step 601 and proceeds to step 602 where a determination is made that authentication of a user on the user device is needed. At step 604, the ability of the user device to support a WAP push message is determined. If the user device can support a WAP push message, then at step 606 a WAP push message is sent to the user device, instructing the user device to load an authentication page. Otherwise, if the user device cannot support a WAP push message, then at step 608 a URL for the authentication page is sent to the user device. In accordance with an embodiment of the present invention, the URL sent to the user device at step 608 is sent in an SMS message. At step 610, the user on the user device is authenticated through the authentication page, and the method ends at step 612.

WAP push is a feature of the WAP specification that allows WAP content, such as a WAP page, to be sent to the user device, such as a cell phone, with minimal user intervention. In accordance with an embodiment of the present invention, mobile banking interface 106 is configured to determine whether the user device needing authentication at step 602 is able to support WAP push functions, as shown in step 604. If WAP push functionality is available, using the WAP push functionality as in step 606 is preferable as the authentication page is sent to the user device without requiring further action from the user of the user device.

An alternative solution, useful for user devices that do not support WAP push functions, is to send a means for accessing the authentication page to the user device at step 608. In accordance with an embodiment of the present invention, the means for accessing the authentication page is the provision of a URL for the authentication page in an SMS message sent to the user device.

One skilled in the relevant arts will appreciate that additional means for authentication can be used, and the aforementioned means are described by way of example and not limitation. For example, the SMS message including the instruction to be processed could include a password for providing authentication.

### VII. ADDITIONAL FUNCTIONALITY OF SERVICE MODULES

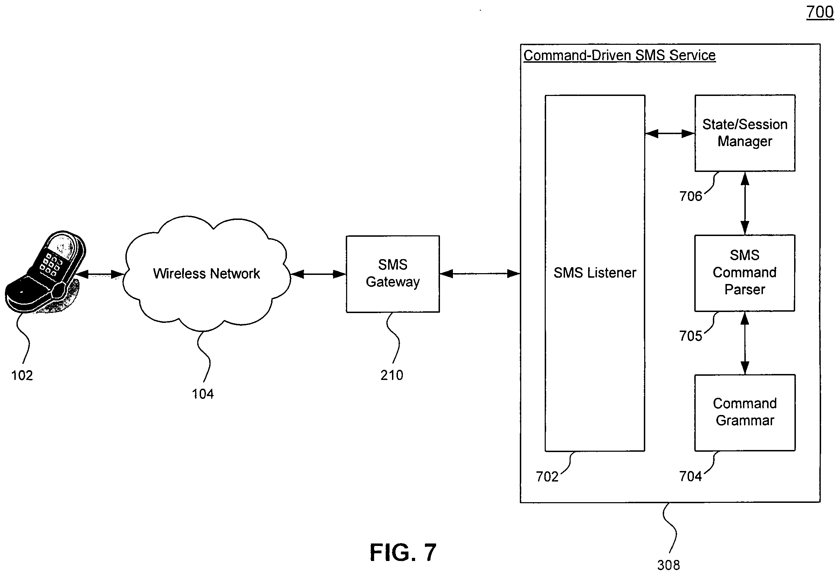

FIG. 7 illustrates a network 700 including command-driven SMS service 308, in accordance with an embodiment of the present invention. As previously disclosed, user device 102 is operable to communicate over wireless network 104 with SMS gateway 210 in order to transmit SMS messages to the mobile banking interface. SMS messages received by the mobile banking interface are handled by command-driven SMS service 308, in accordance with an embodiment of the present invention.

Command-driven SMS service 308 includes SMS listener module 702, which is configured to receive SMS messages from SMS gateway 210, in accordance with an embodiment of the present invention. Command-driven SMS service 308 additionally includes state and session manager 706, which is configured to maintain a state associated with the user device 102, in accordance with an additional embodiment of the present invention. In accordance with a further embodiment of the present invention, command-driven SMS service 308 includes SMS command parser 705 coupled to command grammar module 704 for interpreting the instructions sent by user device 102.

SMS listener module 702 captures SMS instructions from SMS gateway 210, in accordance with an embodiment of the present invention. In accordance with an additional embodiment of the present invention, SMS listener module 702 is configured to receive asynchronous message acknowledgements from SMS gateway 210. In accordance with a further embodiment of the present invention, SMS listener module 702 is configured as a bi-directional communications module, and additionally handles the transmission of messages from mobile banking interface 106 to user device 102 through SMS gateway 210. In accordance with another embodiment of the present invention, the transmission of messages from mobile banking interface 106 to user device 102 through SMS gateway 210 is handled by a separate SMS Sender Service. One skilled in the relevant arts will appreciate that additional communication configuration exist, and the aforementioned configurations are presented by way of example, and not limitation.

State and session manager 708 is configured to maintain user sessions during the processing of user instructions in order to prevent the need for re-authentication for every instruction, in accordance with an embodiment of the present invention. In accordance with an additional embodiment of the present invention, once the user of user device 102 has authenticated, a unique identifier associated with user device 102, such as a phone number, is used to associate further messages received from user device 102 with a session in state and session manager 708 that is known to be authenticated. To enhance security, the session is configured to time out after a certain time period, in accordance with a further embodiment of the present invention.

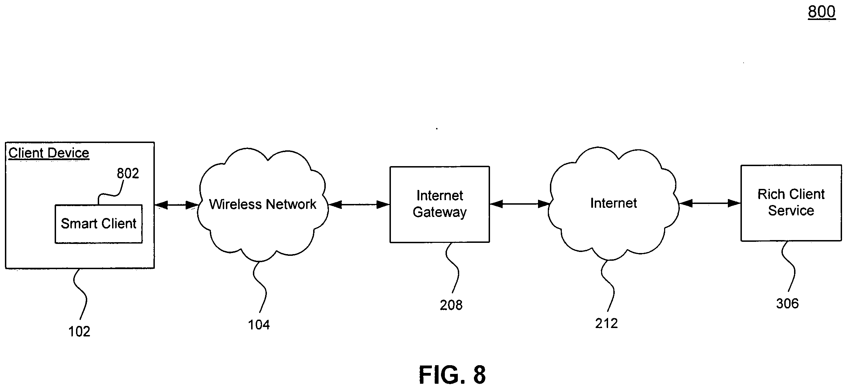

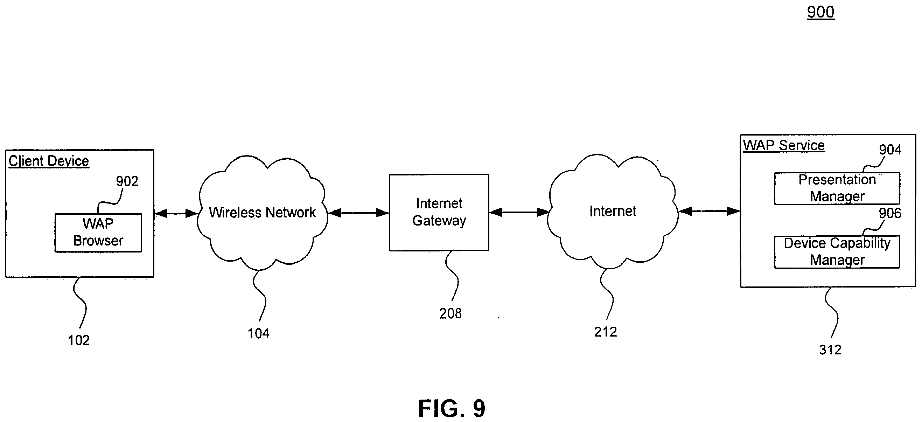

FIG. 8 illustrates a network 800 including rich client service 306, in accordance with an embodiment of the present invention. FIG. 9 illustrates a network 900 including WAP service 312, in accordance with an embodiment of the present invention. Further details regarding the rich client service 306 and WAP service 312 are disclosed in commonly-owned U.S. Patent Application No. 12/183,377, Atty. Dkt. No. 1933.0600000, filed July 31, 2008, entitled MOBILE BANKING ARCHITECTURE, which is hereby incorporated by reference in its entirety.

### VIII. COMMAND AUTHENTICATION LEVELS

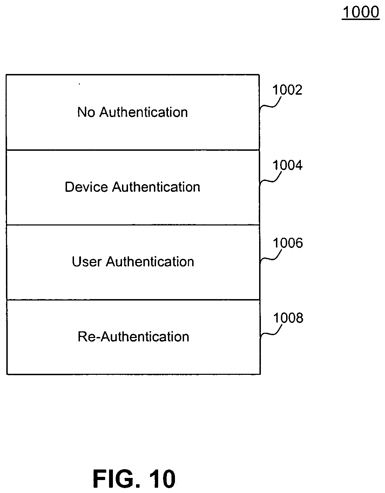

FIG. 10 is a table 1000 listing instruction security levels, in accordance with an embodiment of the present invention. Each instruction received from a user device at a service module, such as service modules 306, 308, and 312 of FIG. 3, is associated with a particular authentication level, in accordance with an embodiment of the present invention.

"No authentication" instruction security level 1002 is associated with instructions that do not require a user device, or the user of the user device, to authenticate with security layer 314 prior to processing of the instruction. "Device authentication" instruction security level 1004 is associated with instructions that require the authentication of the user device itself prior to processing of the instruction. "User authentication" instruction security level 1006 is associated with instructions that require the authentication of the user of the user device prior to processing of the instruction. "Re-authentication" instruction security level 1008 is associated with instructions that require the re-authentication of the user of the user device prior to processing of the instruction, even if the user has previously been authenticated. One skilled in the relevant arts will recognize that additional instruction security levels can be defined and associated with instructions in a similar manner to the aforementioned instruction security levels.

In accordance with an embodiment of the present invention, general banking instructions, such as requesting a bank's current interest rates on loans, do not require authentication, and therefore these instructions are associated with the "no authentication" instruction security level 1002. In accordance with an additional embodiment of the present invention, an instruction to initiate an ACH transaction is associated with the "re-authentication" instruction security level 1008 in order to require a user to authenticate even if the user has previously authenticated. Re-authentication, in accordance with "re-authentication" instruction security level 1008, is performed in a similar manner as the authentication associated with "user authentication" instruction security level 1006, except that it is performed regardless of whether authentication has previously been performed, in accordance with a further embodiment of the present invention.

### IX. USER INTERFACE

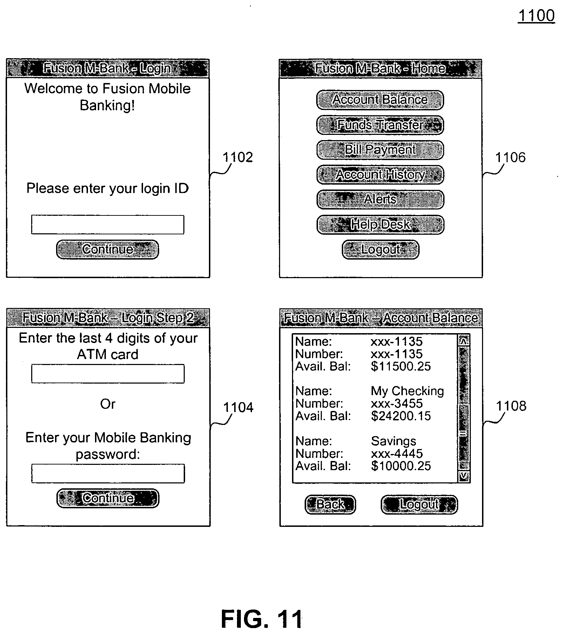

FIG. 11 illustrates a user interface 1102 and 1104 for authenticating a user on a user device 102, in accordance with an embodiment of the present invention. FIG. 11 additionally illustrates a user interface 1106 and 1108 for performing transactions and viewing the results of a transaction on a user device 102, in accordance with a further embodiment of the present invention.

User interface 1102 and 1104 illustrate a user interface used for authenticating a user on a user device 102 using an authentication page, as described in step 610 of flowchart 600 in FIG. 6, in accordance with an embodiment of the present invention. Accordingly, the authentication page of user interface 1102 and 1104 is useful for authenticating a user communicating with mobile banking interface 106 using SMS data 206 by sending the user device 102 a URL to the authentication page 1102 and 1104, or by sending the user device 102 a WAP push message with the authentication page 1102 and 1104, in accordance with an embodiment of the present invention. This aspect of the user interface corresponds to the behavior of the security layer as disclosed above.

Additionally, user interface 1102 and 1104 are used in order to authenticate a user on a user device 102 accessing mobile banking interface 106 using WAP data 202. Further details regarding user interface 1102, 1104, 1106, and 1108 as related to WAP service 312 are disclosed in commonly-owned U.S. Patent Application No. 12/183,377, Atty. Dkt. No. 1933.0600000, filed July 31, 2008, entitled MOBILE BANKING ARCHITECTURE, which is hereby incorporated by reference in its entirety.

One skilled in the relevant arts will recognize that the precise configuration of the user interface can be different from the user interface illustrated in FIG. 11, and that the aforementioned user interfaces are provided by way of example, and not limitation.

### X. ADDITIONAL FUNCTIONALITY OF COMMAND GRAMMAR MODULE

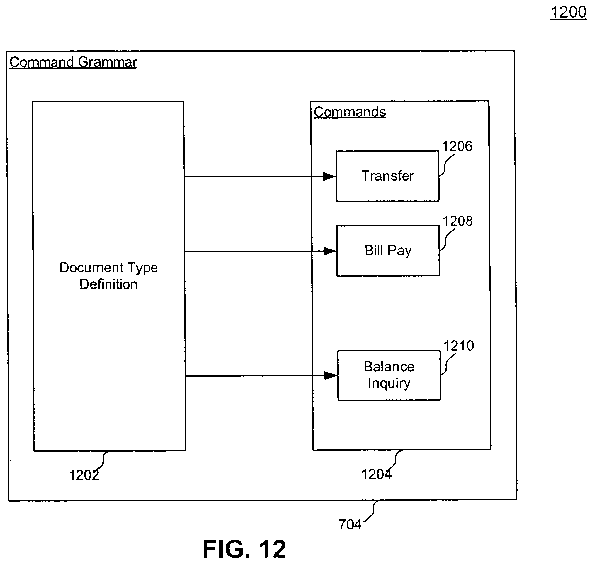

FIG. 12 illustrates a network 1200 including command grammar module 704, in accordance with an embodiment of the present invention. In accordance with an additional embodiment of the present invention, command grammar module 704 includes a document type definition ("DTD") 1202 for defining one or more commands 1204. The commands defined by command grammar module 704 include, for example, transfer command 1206, bill pay command 1208, and balance inquiry command 1210.

Through the use of DTD 1202, a developer of commands 1204 can use a definition provided by DTD 1202 to define a command, such as commands 1206, 1208, and 1210 to interpret an instruction received from a user device at command-driven SMS service module 308 of FIG. 3.

Appendix A includes a DTD for a command definition as in 1202, in accordance with an embodiment of the present invention. Appendix B includes a sample command definition for a funds transfer command, such as transfer command 1206, in accordance with an embodiment of the present invention.

### XI. LOCALIZATION METHODOLOGY

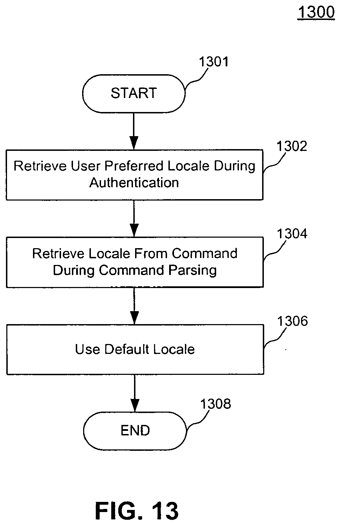

FIG. 13 is a flowchart 1300 depicting an operational flow of I18N module 410 of FIG. 4, in accordance with an embodiment of the present invention. The method of flowchart 1300 is used by I18N module 410 in determining the locale to be used in processing an instruction from a user device, in accordance with an additional embodiment of the present invention.

The method begins at step 1301 and proceeds to step 1302, where the preferred locale of the user of the user device is retrieved during authentication of the user. When authentication of the user is performed, the identity of the user is ascertained, and information about the user's preferences are obtained from user profile information, such as the user profile information of user profile module 412, in accordance with an embodiment of the present invention.

If the user's preferred locale cannot be determined at step 1302, then at step 1304 the locale is determined from the instruction received from the user device. In accordance with an embodiment of the present invention, the instruction will be in a particular language, and the locale is determined to be the locale associated with the particular language.

If the locale cannot be determined at step 1304, then a default locale is used in step 1306. In accordance with an embodiment of the present invention, the default locale is United States English. The method then ends at step 1308.

### XII. EXAMPLE COMPUTER SYSTEM IMPLEMENTATION

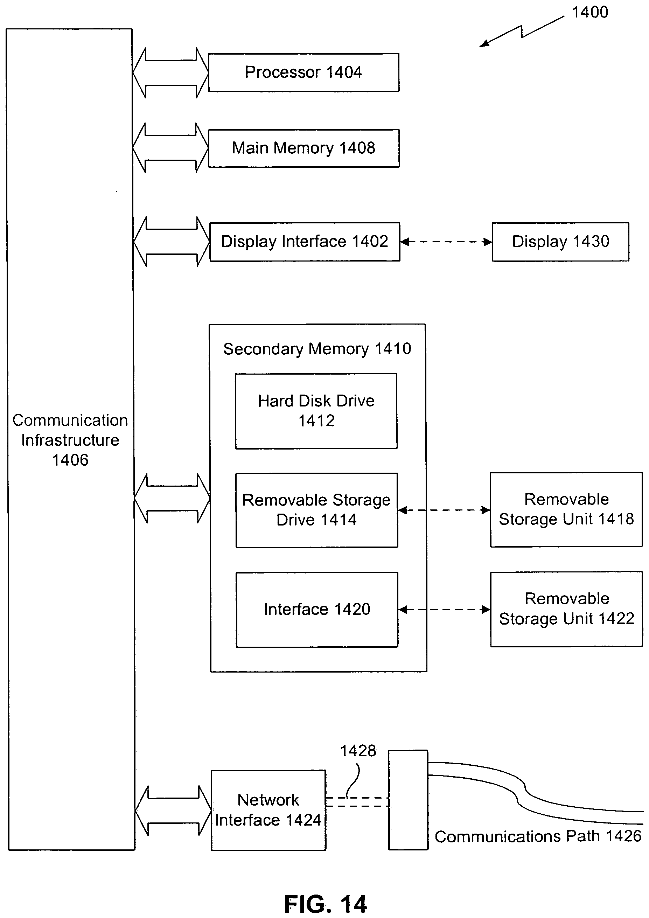

Various aspects of the present invention can be implemented by software, firmware, hardware, or a combination thereof. FIG. 14 illustrates an example computer system 1400 in which the present invention, or portions thereof, can be implemented as computer-readable code. For example, the methods illustrated by flowcharts 500 of FIG. 5, 600 of FIG. 6, and 1300 of FIG. 13, can be implemented in system 1400. Various embodiments of the invention are described in terms of this example computer system 1400. After reading this description, it will become apparent to a person skilled in the relevant art how to implement the invention using other computer systems and/or computer architectures.

Computer system 1400 includes one or more processors, such as processor 1404. Processor 1404 can be a special purpose or a general purpose processor. Processor 1404 is connected to a communication infrastructure 1406 (for example, a bus or network).

Computer system 1400 also includes a main memory 1408, preferably random access memory (RAM), and may also include a secondary memory 1410. Secondary memory 1410 may include, for example, a hard disk drive 1412, a removable storage drive 1414, and/or a memory stick. Removable storage drive 1414 may comprise a floppy disk drive, a magnetic tape drive, an optical disk drive, a flash memory, or the like. The removable storage drive 1414 reads from and/or writes to a removable storage unit 1418 in a well known manner. Removable storage unit 1418 may comprise a floppy disk, magnetic tape, optical disk, etc. which is read by and written to by removable storage drive 1414. As will be appreciated by persons skilled in the relevant art(s), removable storage unit 1418 includes a computer usable storage medium having stored therein computer software and/or data.

In alternative implementations, secondary memory 1410 may include other similar means for allowing computer programs or other instructions to be loaded into computer system 1400. Such means may include, for example, a removable storage unit 1422 and an interface 1420. Examples of such means may include a program cartridge and cartridge interface (such as that found in video game devices), a removable memory chip (such as an EPROM, or PROM) and associated socket, and other removable storage units 1422 and interfaces 1420 which allow software and data to be transferred from the removable storage unit 1422 to computer system 1400.

Computer system 1400 may also include a communications interface 1424. Communications interface 1424 allows software and data to be transferred between computer system 1400 and external devices. Communications interface 1424 may include a modem, a network interface (such as an Ethernet card), a communications port, a PCMCIA slot and card, or the like. Software and data transferred via communications interface 1424 are in the form of signals which may be electronic, electromagnetic, optical, or other signals capable of being received by communications interface 1424. These signals are provided to communications interface 1424 via a communications path 1426. Communications path 1426 carries signals and may be implemented using wire or cable, fiber optics, a phone line, a cellular phone link, an RF link or other communications channels.

In this document, the terms "computer program medium" and "computer usable medium" are used to generally refer to media such as removable storage unit 1418, removable storage unit 1422, and a hard disk installed in hard disk drive 1412. Signals carried over communications path 1426 can also embody the logic described herein. Computer program medium and computer usable medium can also refer to memories, such as main memory 1408 and secondary memory 1410, which can be memory semiconductors (e.g. DRAMs, etc.). These computer program products are means for providing software to computer system 1400.

Computer programs (also called computer control logic) are stored in main memory 1408 and/or secondary memory 1410. Computer programs may also be received via communications interface 1424. Such computer programs, when executed, enable computer system 1400 to implement the present invention as discussed herein. In particular, the computer programs, when executed, enable processor 1404 to implement the processes of the present invention, such as the steps in the methods illustrated by flowcharts 500 of FIG. 5, 600 of FIG. 6, and 1300 of FIG. 13, discussed above. Accordingly, such computer programs represent controllers of the computer system 1400. Where the invention is implemented using software, the software may be stored in a computer program product and loaded into computer system 1400 using removable storage drive 1414, interface 1420, hard drive 1412 or communications interface 1424.

The invention is also directed to computer program products comprising software stored on any computer useable medium. Such software, when executed in one or more data processing device, causes a data processing device(s) to operate as described herein. Embodiments of the invention employ any computer useable or readable medium, known now or in the future. Examples of computer useable mediums include, but are not limited to, primary storage devices (e.g., any type of random access memory), secondary storage devices (e.g., hard drives, floppy disks, CD ROMS, ZIP disks, tapes, magnetic storage devices, optical storage devices, MEMS, nanotechnological storage device, etc.), and communication mediums (e.g., wired and wireless communications networks, local area networks, wide area networks, intranets, etc.).

### XIII. CONCLUSION

While various embodiments of the present invention have been described above, it should be understood that they have been presented by way of example only, and not limitation.

It should be understood that the invention is not limited to these examples. The invention is applicable to any elements operating as described herein. Accordingly, the breadth and scope of the present invention should not be limited by any of the above-described exemplary embodiments, but should be defined only in accordance with the following claims.

### APPENDIX A

```
 <!ELEMENT sms-config (commands, regular-expressions)>
 
 <!ELEMENT commands (common, command+)>
 
 <!ELEMENT command (name, type, language+, property+)>
 
 <!ELEMENT common (case-sensitive, locale)>
 
 <!ELEMENT property (businessid | name | optional | password | sample | userid
 | regular-expression)*>
 
 <!ELEMENT regular-expressions (regular-expression+)>
 
 <!ELEMENT regular-expression (formats | prefix | space-replacement | type)* >
 
 <!ELEMENT language (type, locale)>
 <!ELEMENT type (#PCDATA)>
 <!ELEMENT locale (#PCDATA)>
 <!ELEMENT businessid (#PCDATA)>
 <!ELEMENT name (#PCDATA)>
 <!ELEMENT optional (#PCDATA)>
 <!ELEMENT password (#PCDATA)>
 <!ELEMENT sample (#PCDATA)>
 <!ELEMENT userid (#PCDATA)>
 <!ELEMENT format (#PCDATA)>
 <!ELEMENT prefix (#PCDATA)>
 <!ELEMENT space-replacement (#PCDATA)>
 <!ELEMENT case-sensitive (#PCDATA)>
```

### APPENDIX B

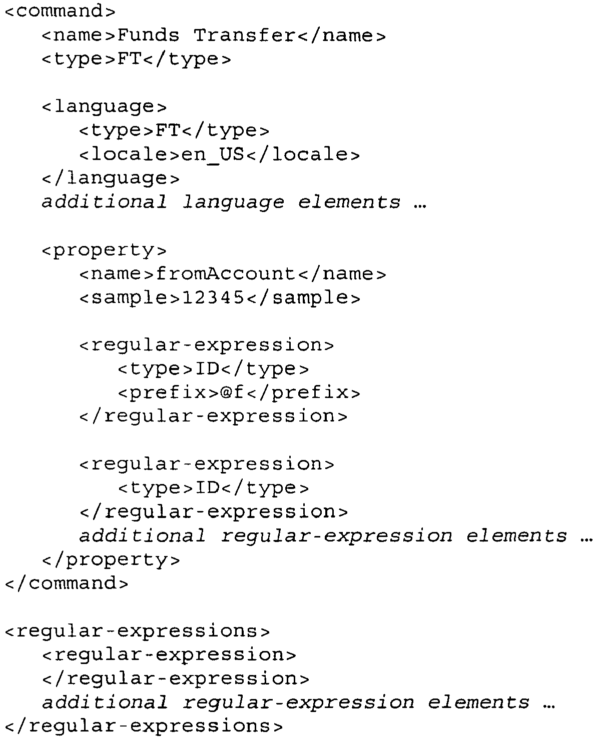

## Claims

1. A method performed at an interface (106) between a user device (102) and a transaction system (108) for interfacing the user device (102) to the transaction system (108), the method comprising:
associating an authentication level (1002-1008) with each of a plurality of instructions, wherein the authentication level is selected from a set of authentication levels comprising: no authentication, device authentication, user authentication, and re-authentication; wherein the re-authentication authentication level requires authentication of a user prior to processing of the instruction regardless of whether authentication has previously been performed;
receiving an instruction from an SMS gateway (210) in an SMS message, the SMS message originating from the user device;
parsing the instruction to obtain a corresponding transaction and determining the authentication level associated with the instruction;
performing authentication in dependence on the determined authentication level; and, if authentication succeeds:
calling a function on the transaction system for performing the transaction;
receiving a response from the transaction system; and
transmitting the response to the user device in a response SMS message.

2. The method of claim 1, the step of determining an authentication level comprising:
determining whether authentication is needed to perform the transaction.

3. The method of claim 2, further comprising:
authenticating the user device if authentication is needed.

4. The method of claim 3, wherein the step of authenticating the user device comprises:
authenticating the user device by comparing a unique property of the user device to a registered value for the unique property.

5. The method of claim 4, wherein the user device is a phone, and further wherein the unique property is a phone number for the phone.

6. The method of claim 2, further comprising:
authenticating the user of the user device if authentication is needed.

7. The method of claim 6, wherein the step of authenticating the user of the user device comprises:
sending a WAP Push message to the user device, the WAP Push message comprising a URL for a user authentication page.

8. The method of claim 6, wherein the step of authenticating the user of the user device comprises:
sending a URL for a user authentication page to the user device.

9. The method of claim 1, wherein the step of parsing the instruction comprises:
locating a command in a command grammar corresponding to the instruction; and
generating the corresponding transaction according to the command.

10. An interface (106) between a user device (102) and a transaction system (108), the interface comprising:
means for associating an authentication level (1002-1008) with each of a plurality of instructions, wherein the authentication level is selected from a set of authentication levels comprising: no authentication, device authentication, user authentication, and re-authentication; wherein the re-authentication authentication level requires authentication of a user prior to processing of the instruction regardless of whether authentication has previously been performed;
a first receiving module (702) to receive an instruction from an SMS gateway (210) in an SMS message, the SMS message originating from the user device;
a parsing module (705) to parse the instruction to obtain a corresponding transaction;
means for determining the authentication level associated with the instruction and performing authentication in dependence on the determined authentication level;
a service manager module (316) to call a function on the transaction system for performing the transaction in the event of successful authentication;
a second receiving module to receive a response from the transaction system; and
a transmitting module to transmit the response to the user device in a response SMS message.

11. The interface of claim 10, further comprising:
a determining module to determine whether authentication is needed to perform the transaction.

12. The interface of claim 11, further comprising:
an authenticating module to authenticate the user device if authentication is needed.

13. The interface of claim 12, wherein the authenticating module is configured to authenticate the user device by comparing a unique property of the user device to a registered value for the unique property.

14. The interface of claim 13, wherein the user device is a phone, and further wherein the unique property is a phone number for the phone.

15. The interface of claim 11, further comprising:
an authenticating module to authenticate the user of the user device if authentication is needed.

16. The interface of claim 15, wherein the authenticating module is configured to send a WAP Push message to the user device, the WAP Push message comprising a URL for a user authentication page.

17. The interface of claim 15, wherein the authenticating module is configured to send a URL for a user authentication page to the user device.

18. The interface of claim 10, wherein the parsing module is configured to locate a command in a command grammar corresponding to the instruction, and to generate the corresponding transaction according to the command.

19. The interface of claim 10, wherein the parsing module is configured to permit definition of new commands.

20. A computer program product comprising a computer-usable medium having computer program logic recorded thereon adapted, when executed on a processor, to perform the method according to any of claims 1 to 9.

## Patentansprüche

1. Verfahren, ausgeführt an einer Schnittstelle (106) zwischen einem Benutzergerät (102) und einem Transaktionssystem (108) zum Verbinden des Benutzergeräts (102) mit dem Transaktionssystem (108), wobei das Verfahren Folgendes beinhaltet:
Assoziieren eines Authentisierungsniveaus (1002-1008) mit jeder von mehreren Anweisungen, wobei das Authentisierungsniveau aus einem Satz von Authentisierungsniveaus ausgewählt wird, der Folgendes umfasst: keine Authentisierung, Geräteauthentisierung, Benutzerauthentisierung und Neuauthentisierung; wobei das Authentisierungsniveau Neuauthentisierung eine Authentisierung eines Benutzers vor dem Verarbeiten der Anweisung unabhängig davon erfordert, ob Authentisierung zuvor durchgeführt wurde;
Empfangen einer Anweisung von einem SMS-Gateway (210) in einer SMS-Nachricht, wobei die SMS-Nachricht von dem Benutzergerät stammt;
Parsen der Anweisung zum Einholen einer entsprechenden Transaktion und Feststellen des mit der Anweisung assoziierten Authentisierungsniveaus;
Durchführen einer Authentisierung in Abhängigkeit von dem festgestellten Authentisierungsniveau; und, wenn Authentisierung erfolgreich ist:
Anrufen einer Funktion an dem Transaktionssystem zum Durchführen der Transaktion;
Empfangen einer Antwort von dem Transaktionssystem; und
Senden der Antwort zum Benutzergerät in einer Antwort-SMS-Nachricht.

2. Verfahren nach Anspruch 1, wobei der Schritt des Feststellens eines Authentisierungsniveaus Folgendes beinhaltet:
Feststellen, ob Authentisierung zum Ausführen der Transaktion notwendig ist.

3. Verfahren nach Anspruch 2, das ferner Folgendes beinhaltet:
Authentisieren des Benutzergeräts, wenn Authentisierung benötigt wird.

4. Verfahren nach Anspruch 3, wobei der Schritt des Authentisierens des Benutzergeräts Folgendes beinhaltet:
Authentisieren des Benutzergeräts durch Vergleichen einer eindeutigen Eigenschaft des Benutzergeräts mit einem registrierten Wert für die eindeutige Eigenschaft.

5. Verfahren nach Anspruch 4, wobei das Benutzergerät ein Telefon ist und wobei ferner die eindeutige Eigenschaft eine Telefonnummer für das Telefon ist.

6. Verfahren nach Anspruch 2, das ferner Folgendes beinhaltet:
Authentisieren des Benutzers eines Benutzergeräts, wenn Authentisierung benötigt wird.

7. Verfahren nach Anspruch 6, wobei der Schritt des Authentisierens des Benutzers des Benutzergeräts Folgendes beinhaltet:
Senden einer WAP Push Nachricht zum Benutzergerät, wobei die WAP Push Nachricht eine URL für eine Benutzerauthentisierungsseite umfasst.

8. Verfahren nach Anspruch 6, wobei der Schritt des Authentisierens des Benutzers des Benutzergeräts Folgendes beinhaltet:
Senden einer URL für eine Benutzerauthentisierungsseite zum Benutzergerät.

9. Verfahren nach Anspruch 1, wobei der Schritt des Parsens der Anweisung Folgendes beinhaltet:
Suchen eines Befehls in einer Befehlsgrammatik entsprechend der Anweisung; und
Erzeugen der entsprechenden Transaktion gemäß dem Befehl.

10. Schnittstelle (106) zwischen einem Benutzergerät (102) und einem Transaktionssystem (108), wobei die Schnittstelle Folgendes umfasst:
Mittel zum Assoziieren eines Authentisierungsniveaus (1002-1008) mit jeder von mehreren Anweisungen, wobei das Authentisierungsniveau ausgewählt ist aus einem Satz von Authentisierungsniveaus, der Folgendes umfasst: keine Authentisierung, Geräteauthentisierung, Benutzerauthentisierung und Neuauthentisierung; wobei das Authentisierungsniveau Neuauthentisierung eine Authentisierung eines Benutzers vor dem Verarbeiten des Befehls unabhängig davon erfordert, ob zuvor Authentisierung durchgeführt wurde;
ein erstes Empfangsmodul (702) zum Empfangen einer Anweisung von einem SMS-Gateway (210) in einer SMS-Nachricht, wobei die SMS-Nachricht vom Benutzergerät stammt;
ein Parsing-Modul (705) zum Parsen der Anweisung zum Einholen einer entsprechenden Transaktion;
Mittel zum Feststellen des mit der Anweisung assoziierten Authentisierungsniveaus; und Durchführen der Authentisierung in Abhängigkeit von dem festgestellten Authentisierungsniveau;
ein Service-Manager-Modul (316) zum Anrufen einer Funktion auf dem Transaktionssystem zum Durchführen der Transaktion im Falle einer erfolgreichen Authentisierung;
ein zweites Empfangsmodul zum Empfangen einer Antwort von dem Transaktionssystem; und
ein Sendemodul zum Senden der Antwort zum Benutzergerät in einer Antwort-SMS-Nachricht.

11. Schnittstelle nach Anspruch 10, die ferner Folgendes umfasst:
ein Feststellungsmodul zum Feststellen, ob Authentisierung zum Durchführen der Transaktion nötig ist.

12. Schnittstelle nach Anspruch 11, die ferner Folgendes umfasst:
ein Authentisierungsmodul zum Authentisieren des Benutzergeräts, wenn Authentisierung benötigt wird.

13. Schnittstelle nach Anspruch 12, wobei das Authentisierungsmodul zum Authentisieren des Benutzergeräts durch Vergleichen einer eindeutigen Eigenschaft des Benutzergeräts mit einem registrierten Wert für die eindeutige Eigenschaft konfiguriert ist.

14. Schnittstelle nach Anspruch 13, wobei das Benutzergerät ein Telefon ist und wobei die eindeutige Eigenschaft ferner eine Telefonnummer für das Telefon ist.

15. Schnittstelle nach Anspruch 11, die ferner Folgendes umfasst:
ein Authentisierungsmodul zum Authentisieren des Benutzers des Benutzergeräts, wenn Authentisierung benötigt wird.

16. Schnittstelle nach Anspruch 15, wobei das Authentisierungsmodul zum Senden einer WAP Push Nachricht zum Benutzergerät konfiguriert ist, wobei die WAP Push Nachricht eine URL für eine Benutzerauthentisierungsseite umfasst.

17. Schnittstelle nach Anspruch 15, wobei das Authentisierungsniveau zum Senden einer URL für eine Benutzerauthentisierungsseite zum Benutzergerät konfiguriert ist.

18. Schnittstelle nach Anspruch 10, wobei das Parsing-Modul zum Suchen eines Befehls in einer Befehlsgrammatik entsprechend der Anweisung und zum Erzeugen der entsprechenden Transaktion gemäß dem Befehl konfiguriert ist.

19. Schnittstelle nach Anspruch 10, wobei das Parsing-Modul zum Zulassen einer Definition von neuen Befehlen konfiguriert ist.

20. Computerprogrammprodukt, das ein computerbenutzbares Medium mit darauf aufgezeichneter Computerprogrammlogik umfasst, ausgelegt, bei Ausführung auf einem Prozessor, zum Durchführen des Verfahrens nach einem der Ansprüche 1 bis 9.

## Revendications

1. Procédé réalisé au niveau d'une interface (106) entre un dispositif d'utilisateur (102) et un système de transactions (108) pour mettre en interface le dispositif d'utilisateur (102) avec le système de transactions (108), le procédé comprenant les opérations consistant à :
associer un niveau d'authentification (1002 - 1008) à chaque instruction d'une pluralité d'instructions, cas dans lequel le niveau d'authentification est sélectionné parmi un ensemble de niveaux d'authentification comprenant : aucune authentification, authentification de dispositif, authentification d'utilisateur, et ré-authentification ; cas dans lequel le niveau d'authentification de ré-authentification nécessite l'authentification d'un utilisateur avant le traitement de l'instruction indépendamment du fait que l'authentification a été réalisée antérieurement ;
recevoir une instruction en provenance d'une passerelle SMS (210) dans un message SMS, le message SMS ayant pour origine le dispositif d'utilisateur ;
analyser l'instruction afin d'obtenir une transaction correspondante et déterminer le niveau d'authentification associé à l'instruction ;
réaliser une authentification en dépendance du niveau d'authentification ayant été déterminé ; et, si l'authentification réussit :
appeler une fonction sur le système de transactions pour réaliser la transaction ;
recevoir une réponse en provenance du système de transactions ; et
transmettre la réponse au dispositif d'utilisateur dans un message SMS de réponse.

2. Procédé de la revendication 1, l'étape de détermination d'un niveau d'authentification comprenant l'opération consistant à :
déterminer si une authentification est nécessaire pour réaliser la transaction.

3. Procédé de la revendication 2, comprenant en outre l'opération consistant à :
authentifier le dispositif d'utilisateur si une authentification est nécessaire.

4. Procédé de la revendication 3, l'étape d'authentification du dispositif d'utilisateur comprenant l'opération consistant à :
authentifier le dispositif d'utilisateur en comparant une propriété inédite du dispositif d'utilisateur à une valeur enregistrée pour la propriété inédite.

5. Procédé de la revendication 4, le dispositif d'utilisateur étant un téléphone, et en outre la propriété inédite étant un numéro de téléphone pour le téléphone.

6. Procédé de la revendication 2, comprenant en outre l'opération consistant à :
authentifier l'utilisateur du dispositif d'utilisateur si une authentification est nécessaire.

7. Procédé de la revendication 6, l'étape d'authentification de l'utilisateur du dispositif d'utilisateur comprenant l'opération consistant à :
envoyer un message « WAP Push » au dispositif d'utilisateur, le message « WAP Push » comprenant un URL pour une page d'authentification d'utilisateur.

8. Procédé de la revendication 6, l'étape d'authentification de l'utilisateur du dispositif d'utilisateur comprenant l'opération consistant à :
envoyer un URL pour une page d'authentification d'utilisateur au dispositif d'utilisateur.

9. Procédé de la revendication 1, l'étape d'analyse de l'instruction comprenant les opérations consistant à :
localiser une commande dans une grammaire de commandes correspondant à l'instruction ; et
générer la transaction correspondante conformément à la commande.

10. Interface (106) entre un dispositif d'utilisateur (102) et un système de transactions (108), l'interface comprenant :
des moyens pour associer un niveau d'authentification (1002 - 1008) à chaque instruction d'une pluralité d'instructions, cas dans lequel le niveau d'authentification est sélectionné parmi un ensemble de niveaux d'authentification comprenant : aucune authentification, authentification de dispositif, authentification d'utilisateur, et ré-authentification ; cas dans lequel le niveau d'authentification de ré-authentification nécessite l'authentification d'un utilisateur avant le traitement de l'instruction indépendamment du fait que l'authentification a été réalisée antérieurement ;
un premier module de réception (702) pour recevoir une instruction en provenance d'une passerelle SMS (210) dans un message SMS, le message SMS ayant pour origine le dispositif d'utilisateur ;
un module d'analyse (705) pour analyser l'instruction afin d'obtenir une transaction correspondante ;
des moyens pour déterminer le niveau d'authentification associé à l'instruction et réaliser l'authentification en dépendance du niveau d'authentification ayant été déterminé ;
un module gestionnaire de services (316) pour appeler une fonction sur le système de transactions afin de réaliser la transaction dans le cas d'une authentification réussie ;
un deuxième module de réception pour recevoir une réponse en provenance du système de transactions ; et
un module de transmission afin de transmettre la réponse au dispositif d'utilisateur dans un message SMS de réponse.

11. Interface de la revendication 10, comprenant en outre :
un module de détermination pour déterminer si une authentification est nécessaire pour réaliser la transaction.

12. Interface de la revendication 11, comprenant en outre :
un module d'authentification pour authentifier le dispositif d'utilisateur si une authentification est nécessaire.

13. Interface de la revendication 12, le module d'authentification étant configuré de façon à authentifier le dispositif d'utilisateur en comparant une propriété inédite du dispositif d'utilisateur à une valeur enregistrée pour la propriété inédite.

14. Interface de la revendication 13, le dispositif d'utilisateur étant un téléphone, et en outre la propriété inédite étant un numéro de téléphone pour le téléphone.

15. Interface de la revendication 11, comprenant en outre :
un module d'authentification pour authentifier l'utilisateur du dispositif d'utilisateur si une authentification est nécessaire.

16. Interface de la revendication 15, le module d'authentification étant configuré de façon à envoyer un message « WAP Push » au dispositif d'utilisateur, le message « WAP Push » comprenant un URL pour une page d'authentification d'utilisateur.

17. Interface de la revendication 15, le module d'authentification étant configuré de façon à envoyer un URL pour une page d'authentification d'utilisateur au dispositif d'utilisateur.

18. Interface de la revendication 10, le module d'analyse étant configuré de façon à localiser une commande dans une grammaire de commandes correspondant à l'instruction, et à générer la transaction correspondante conformément à la commande.

19. Interface de la revendication 10, le module d'analyse étant configuré de façon à permettre la définition de nouvelles commandes.

20. Produit à programme informatique comprenant un support utilisable par ordinateur possédant une logique de programme informatique laquelle est enregistrée sur celui-ci conçue, lorsqu'elle est exécutée sur un processeur, pour réaliser le procédé conformément à l'une quelconque des revendications 1 à 9.
